# EUROPEAN PATENT APPLICATION

(11) **EP 4 620 308 A1**
(43) Date of publication of application: **24.09.2025**
(21) Application number: 25164056.1
(22) Date of filing: 17.03.2025
(51) Int. Cl.: A23G 9/04, A23G 9/08, A23G 9/12, A23G 9/22, A23G 9/28, A23G 9/30

(54) **METHOD AND MACHINE FOR MAKING A SINGLE-DOSE ICE CREAM PRODUCT**

(30) Priority: 18.03.2024 IT 202400005944
(71) Applicant: Ali Group S.r.l. - Carpigiani, 20063 Cernusco sul Naviglio, Milano (IT)
(72) Inventor: TASSI, Federico, 40122 BOLOGNA (IT); LAZZARINI, Roberto, 42100 REGGIO EMILIA (IT)
(74) Representative: Milli, Simone

(57) **Abstract**

A method for making a single portion of an ice cream product, in particular, gelato, comprising the following temporal step sequence:
- providing a machine (1) for making single-portion gelato and provided with a batch freezing chamber (2) and a stirrer (4) mounted inside the batch freezing chamber (2);
- preloading the batch freezing chamber (2) with a portion of base mixture;
- turning on the cooling of the batch freezing chamber (2) and mixing the portion of base mixture in the batch freezing chamber (2) to keep the portion of base mixture in a semiliquid, standby condition at a predetermined temperature of between -5°C and 5°C;
- feeding an additional base liquid and/or a desired flavouring into the batch freezing chamber (2), defining a predetermined gelato flavour;
- turning on the simultaneous cooling and stirring mode of the batch freezing chamber (2) to convert the base mixture with the added additional liquid and/or flavouring into a single portion of gelato having the predetermined flavour;
- dispensing the single gelato portion made in the batch freezing chamber (2) into a serving container (6).

## Description

The present invention This invention relates to a method and a machine and apparatus for making a single-dose ice cream product.

A strongly felt need not only in the ice cream trade but also in the pastry and catering trades is the need to be able to make and serve products in small quantities - for example, single portions - in a very short space of time so as to meet on the spot requests from customers.

In effect, one of the main needs in the ice cream trade is that of satisfying the needs of customers who want to have a fresh, quality product made on the spot to their specifications.

A single-dose ice cream meets these requirements in that it allows making a portion of ice cream on the spot with the ingredients chosen by the customer, without waste or preservatives.

The machines needed to do this must be able to prepare the ice cream in an extremely short space of time so as not to make customers wait at the point of sale.

These machines must also be user-friendly, reliable and easy to clean, to ensure product hygiene and safety. Moreover, they must be compact and adaptable to different shop spaces, both large and small.

This invention has for an aim to meet the above-mentioned need, that is to say, to provide a method and a machine for making single-dose ice cream products, in particular gelato, which allow the ice cream product to be made in an extremely short time.

Another aim of the invention is to provide a method and a machine for making single-dose gelato and which are particularly efficient and capable to making a high-quality product.

According to the invention, this aim is fully achieved by the method and the machine for making liquid and/or semiliquid food products for the ice cream trade, as characterized in the appended claims.

The technical features of the invention will become more apparent from the following detailed description of a preferred embodiment, illustrated solely by way of non-limiting example in the accompanying drawing in which:

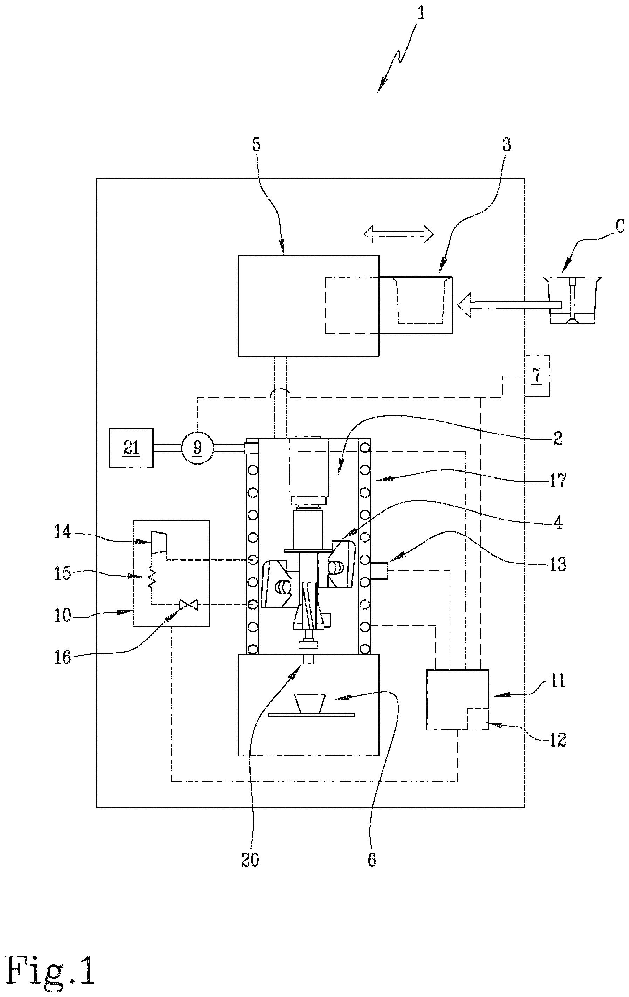

- Figure 1 schematically illustrates a machine for making liquid and/or semiliquid food products;
- Figure 2 shows two curves obtained for different mixtures during processing in the machine 1, relating to batch freezing times as a function of mixture inlet temperatures.

This disclosure refers to a method and a machine 1 for making single-portion gelato, in particular for making products of the ice cream trade, in particular, gelato in different flavours from a base mixture in liquid or semiliquid form.

By "products of the ice cream trade" is meant any type of frozen or chilled food product based on milk, cream, sugar and other ingredients.

Products of the ice cream trade comprise, for example, artisanal gelato, granita. frozen yogurt, sorbet, soft-serve ice cream, etc.

Hereinafter, for convenience, reference is made only to gelato.

The invention allows obtaining portions of fresh, single-dose gelato quickly and easily.

The expression "single-dose" is used to mean a quantity of product of between 50 and 550 g and, still more preferably, between 70 and 220 g.

The machine 1 comprises a batch freezing chamber 2 provided with a stirrer 4 and a thermal system 10 (for cooling).

According to an aspect, the batch freezing chamber 2 has a horizontal axis.

According to another aspect, the batch freezing chamber 2 is cylindrical.

According to another aspect, the batch freezing chamber 2 has a volumetric capacity of between 0.15 and 1.5 litres and, still more preferably, between 0.3 and 0.9 litres.

According to another aspect, the batch freezing chamber 2 is provided with a dispensing valve 20, located in the bottom part of the chamber to allow dispensing the portion of ice cream directly into a disposable container 6, without the need for additional tools or utensils.

According to this invention, the method comprises the following steps:
- providing a machine 1 for making single-portion gelato and provided with a batch freezing chamber 2 and a stirrer 4 mounted inside the batch freezing chamber;
- preloading the batch freezing chamber 2 with a portion of base mixture (preferably with a neutral flavour, that is, capable of being used to make a plurality of gelato flavours);
- turning on the cooling of the batch freezing chamber and mixing the portion of base mixture in the batch freezing chamber to keep the portion of base mixture in a semiliquid, standby condition at a predetermined temperature of between -5°C and 5°C or, still more preferably, between - 2°C and +2°C (these temperature values being higher than the freezing point of the base mixture);
- feeding an additional base liquid and/or a desired flavouring into the batch freezing chamber 2, defining a predetermined gelato flavour;
- turning on the simultaneous cooling and stirring mode of the batch freezing chamber 2 to convert the base mixture with the added additional liquid and/or flavouring into a single portion of gelato having the predetermined flavour;
- dispensing the single gelato portion made in the batch freezing chamber 2 into a serving container 6.

It should be noted that keeping the base mixture in the batch freezing chamber 2 at a near-zero temperature and mixing it without freezing it advantageously allows reducing the time needed for subsequent processing of the finished product. In effect, the mixture is already at a temperature close to the processing temperature, and consequently, a single dose of ice cream product (in particular, gelato) can be made in an extremely short time.

According to an aspect of this disclosure, the method also comprises the step of making a plurality of single portions of gelato in different flavours (at least two) according to the following temporal sequence:
- preloading the batch freezing chamber 2 with a portion of neutral base mixture, turning on the cooling of the batch freezing chamber 2 and mixing the portion of base mixture to keep it in a standby condition at a predetermined temperature (between -5°C and +5°C or, still more preferably, between -2°C and +2° C);
- feeding the additional liquid and/or desired flavouring into the batch freezing chamber 2 defining a first gelato flavour;
- turning on the simultaneous cooling and stirring mode of the batch freezing chamber 2 to convert the base mixture with the added additional liquid and/or flavouring into a single portion of gelato having a first flavour;
- dispensing the single gelato portion defining the first flavour made in the batch freezing chamber 2 into a first serving container 6;
- preloading the batch freezing chamber 2 with a portion of neutral base mixture, turning on the cooling of the batch freezing chamber 2 and mixing the portion of base mixture to keep it in a standby condition at a predetermined temperature;
- feeding the additional liquid and/or desired flavouring into the batch freezing chamber 2 defining a second gelato flavour;
- turning on the simultaneous cooling and stirring mode of the batch freezing chamber 2 to convert the base mixture with the added additional liquid and/or flavouring into a single portion of gelato having a second flavour;
- dispensing the single gelato portion defining the second flavour made in the batch freezing chamber 2 into a second serving container 6.

The expression "neutral base mixture" denotes a mixture which can be used to make a plurality of flavours by adding flavourings and/or additional liquid or semiliquid components.

According to another aspect of this disclosure, the method comprises a step of cleaning the batch freezing chamber 2 with a cleaning liquid, after the step of dispensing the single gelato portion defining the first flavour made in the batch freezing chamber 2 into a first serving container 6.

This step advantageously allows avoiding the risk of mixing one gelato flavour with another, different flavour.

According to yet another aspect of this disclosure, the method comprises a step of a user setting at least one parameter from a control panel 7, and the step of turning on the simultaneous cooling and stirring mode of the batch freezing chamber 2 to convert the portion of base mixture with the added additional liquid and/or flavouring into a single portion of gelato comprises a step of turning on the stirrer 4 and/or the thermal system 10 based at least on one or more of the aforesaid parameters set by the user. By way of non-limiting example, the parameters may regard temperature, stirring speed, processing time, consistency and/or density of the gelato, type of product being processed, etc.

This aspect of the method has the advantage of allowing users to personalize the flavour and quality of the gelato by choosing the parameters most suited to their own preferences and recipes.

Moreover, using a control panel 7 allows the batch freezing process variables to be controlled easily and precisely, thereby ensuring greater uniformity and repeatability of results.

In a further embodiment of the invention, the method comprises the steps of:
- setting at least one parameter regarding a gelato flavour by reading a bar code or by means of a command issued by a user;
- adjusting the thermal treatment and/or stirring as a function of the result of said setting.

This embodiment allows obtaining an optimum result based on the type of gelato chosen.

In another embodiment of the invention, the method comprises the step of storing the base mixture in a storage tank 21 in fluid communication with the batch freezing chamber 2; and the step of preloading the batch freezing chamber 2 with a portion of base mixture comprises a step of transferring a portion of base mixture from the storage tank 21 to the batch freezing chamber 2. This embodiment of the method, allows having a quantity of base mixture ready for use at all times.

The following are some advantages of this aspect:
- space can be optimized because the storage tank and the batch freezing chamber 2 can be located in different places and connected to each other by piping;
- efficiency is increased because the batch freezing chamber 2 can be preloaded with the exact quantity of mixture needed to produce a portion of gelato;
- it prevents contamination because the base mixture does not come into contact with the air or other external agents during its transfer from the storage tank 21 to the batch freezing chamber 2.

In another embodiment of the invention, the step of turning on the cooling of the batch freezing chamber 2 and mixing the portion of base mixture in the batch freezing chamber 2 to keep the portion of base mixture in a semiliquid, standby condition at a predetermined temperature of between - 5°C and 5°C (and more preferably, between -2°C and 2°C) comprises a step of operating the stirrer 4 in a substantially continuous mode.

This embodiment allows preventing the formation of ice crystals in the base mixture so the consistency remains smooth.

The following are some advantages of this embodiment:
- the gelato is made creamier because the base mixture does not undergo sudden temperature changes and remains in a semiliquid state until it is time for it to be processed;
- processing times are reduced because the batch freezing chamber 2 does not need to excessively cool the base mixture in a short space of time.

According to another aspect, the base mixture comprises one or more of the following ingredients: water, sugar, stabilizers, thickening agents and/or an acidifier.

Furthermore, the composition of the base mixture is preferably such that its freezing point is lower than a temperature in the range between -5°C and 5°C.

This disclosure also relates to a machine 1 for making single-portion gelato, configured to implement the method described above.

The machine 1 comprises:
- a storage tank 21 for the base mixture;
- a batch freezing chamber 2, in fluid communication with the storage tank 21 for the base mixture and provided with a base mixture infeed valve 9;
- a system 10 for cooling the batch freezing chamber 2 operable to cool and/or batch freeze the base mixture present in the batch freezing chamber 2;
- a stirrer 4 mounted inside the batch freezing chamber 2;
- a control unit 11 connected to the cooling system 10 and to the stirrer 4 to drive them;
- a user interface 12, connected in use to the control unit 11, configured to send commands to the control unit 11, the control unit 11 being configured to activate the cooling system 10 and the stirrer 4 to keep the base mixture in a standby (semiliquid) condition at a temperature in a range of between
- 5°C and 5°C (more preferably between -2°C and 2°C).

According to another aspect, the user interface 12 is configured to allow selecting a gelato flavour.

The cooling system 10 is configured to cool and hold the base mixture at an optimum temperature for crystallizing the product being processed.

The cooling system 10 comprises a compressor 14, a heat exchanger 15, an expansion valve16 and an evaporator 17, connected in series in a closed circuit in which there flows a heat exchanger fluid, or refrigerant.

It should be noted that the compressor 14 compresses the heat exchanger fluid which flows in the heat exchanger 15, where it transfers heat to the outside environment. The expansion valve 16 reduces the pressure of the refrigerant which enters the evaporator 17, where it absorbs heat from the batch freezing chamber 2, thus lowering its temperature.

According to an aspect, the machine 1 comprises at least one flavouring releasing device 5, in fluid communication with the batch freezing chamber 2 and configured to feed a predetermined quantity of flavouring into the batch freezing chamber 2.

Preferably, the flavouring releasing device 5 comprises a housing 3 for capsules C, and a device for breaking the capsules, not illustrated.

According to yet another aspect, the machine 1 comprises a temperature sensor 13, connected to the batch freezing chamber 2 and to the control unit 11.

According to another aspect, the control unit 11 is configured to adjust at least one parameter relating to the cooling system 10 and/or to the stirrer 4 as a function of the selection made.

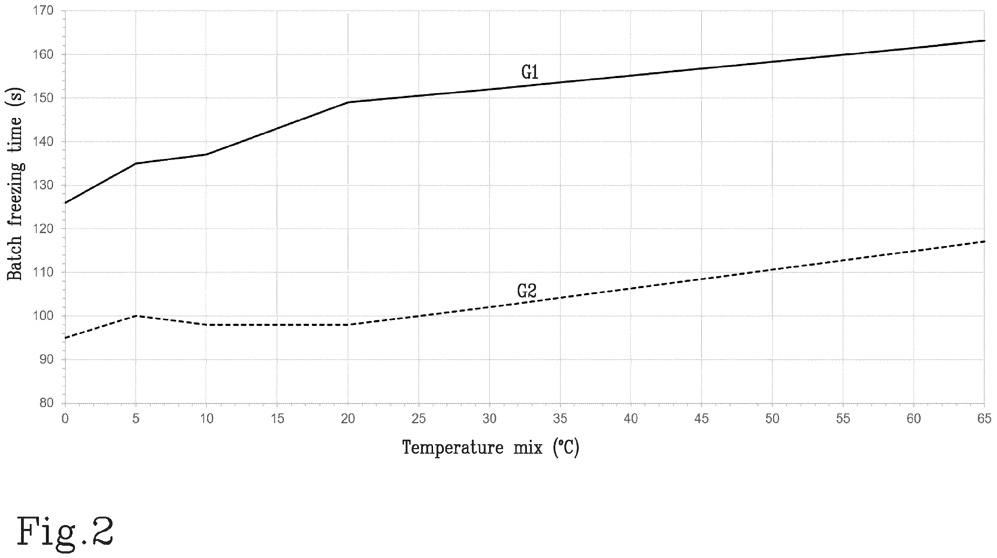

Figure 2 is a graph showing the batch freezing time (in seconds, on the y-axis) compared to temperature (in °C, on the x-axis) of the mixture entering the batch freezing chamber 2 (that is, at the start of the batch freezing cycle) for two different types of mixture: G1 a milk-based mixture, and G2 a fruit-based mixture.

As is clearly evident from the graph of Figure 2, the higher the temperature of the mixture at the start of the batch freezing cycle, the longer the batch freezing time.

It is clear, from the graph, that mixture temperatures below 5°C allow a marked improvement in batch freezing times, which are considerably reduced (in linear fashion). Thus, by activating the cooling of the batch freezing chamber 2 and mixing the portion of base mixture in the batch freezing chamber 2 to keep the portion of base mixture in a semiliquid, standby condition at a predetermined temperature of between -5°C and 5°C, the machine and method of the invention advantageously allow obtaining a gelato in an extremely short space of time, which is particularly important in the case of a machine used for making single portions.

Indeed, since the single-dose machine dispenses a single dose in each cycle, it is important to be able to reduce turnaround times so that two or more portions for two or more customers can be made more quickly.

## Claims

1. A method for making a single portion of an ice cream product, in particular, gelato, comprising the following temporal step sequence:
- providing a machine (1) for making single-portion gelato and provided with a batch freezing chamber (2) and a stirrer (4) mounted inside the batch freezing chamber (2);
- preloading the batch freezing chamber (2) with a portion of base mixture;
- turning on the cooling of the batch freezing chamber (2) and mixing the portion of base mixture in the batch freezing chamber (2) to keep the portion of base mixture in a semiliquid, standby condition at a predetermined temperature of between -5°C and 5°C;
- feeding an additional base liquid and/or a desired flavouring into the batch freezing chamber (2), defining a predetermined gelato flavour;
- turning on the simultaneous cooling and stirring mode of the batch freezing chamber (2) to convert the base mixture with the added additional liquid and/or flavouring into a single portion of gelato having the predetermined flavour;
- dispensing the single gelato portion made in the batch freezing chamber (2) into a serving container (6).

2. The method according to claim 1, wherein the step of feeding an additional base liquid and/or desired flavouring comprises a step of extracting a powdered product from a capsule (C) and conveying it into the batch freezing chamber (2).

3. The method according to claim 1, wherein the step of feeding an additional base liquid comprises a step of extracting a liquid product from a stick and conveying it into the batch freezing chamber (2).

4. The method according to any one of the preceding claims, comprising a step of making a plurality of single portions of gelato in different flavours, according to the following temporal sequence:
- preloading the batch freezing chamber (2) with a portion of neutral base mixture and turning on the cooling and mixing mode of the batch freezing chamber (2) to keep the portion of base mixture in a standby condition at a predetermined temperature of between -5°C and 5°C;
- feeding the additional liquid and/or desired flavouring into the batch freezing chamber (2) defining a first gelato flavour;
- turning on the simultaneous cooling and stirring mode of the batch freezing chamber (2) to convert the base mixture with the added additional liquid and/or flavouring into a single portion of gelato having a first flavour;
- dispensing the single gelato portion defining the first flavour made in the batch freezing chamber (2) into a serving container (6);
- preloading the batch freezing chamber (2) with a portion of neutral base mixture and turning on the cooling and mixing mode of the batch freezing chamber (2) to keep the portion of base mixture in a standby condition at a predetermined temperature of between -5°C and 5°C;
- feeding the additional liquid and/or desired flavouring into the batch freezing chamber (2) defining a second gelato flavour;
- turning on the simultaneous cooling and stirring mode of the batch freezing chamber (2) to convert the base mixture with the added additional liquid and/or flavouring into a single portion of gelato having a second flavour;
- dispensing the single gelato portion defining the second flavour made in the batch freezing chamber (2) into a serving container (6);

5. The method according to the preceding claim, comprising a step of cleaning the batch freezing chamber (2) with a cleaning liquid, after the step of dispensing the single gelato portion defining the first flavour made in the batch freezing chamber (2) into a first serving container (6).

6. The method according to any one of the preceding claims, further **characterized in that** it comprises a step of a user setting parameters (P1, P2, P3) from a control panel (7), and wherein the step of turning on the simultaneous cooling and stirring mode of the batch freezing chamber (2) to convert the portion of base mixture with the added additional liquid and/or flavouring into a single portion of gelato comprises a step of turning on the stirrer (4) and/or a thermal system (10) based at least on one or more of the aforesaid parameters (P1, P2, P3) set by the user.

7. The method according to any one of the preceding claims, further **characterized in that** it comprises the following steps:
- setting at least one parameter regarding a gelato flavour by reading a bar code or by means of a command issued by a user;
- adjusting the thermal treatment and/or stirring as a function of the result of said setting.

8. The method according to any one of the preceding claims, further **characterized in that** it comprises the step of storing the base mixture in a storage tank (21) in fluid communication with the batch freezing chamber (2); and wherein the step of preloading the batch freezing chamber (2) with a portion of base mixture comprises a step of transferring a portion of base mixture from the storage tank (21) to the batch freezing chamber (2).

9. The method according to any one of the preceding claims, wherein the step of turning on the cooling of the batch freezing chamber (2) and mixing the portion of base mixture in the batch freezing chamber (2) to keep the portion of base mixture in a semiliquid, standby condition at a predetermined temperature of between -5°C and 5°C comprises a step of operating the stirrer (4) in substantially continuous mode.

10. The method according to any one of the preceding claims, wherein the base mixture comprises one or more of the following ingredients: water, sugar, stabilizers, thickening agents and/or an acidifier.

11. The method according to any one of the preceding claims, wherein the base mixture has a composition whose freezing point is a temperature below the -5°C to 5°C temperature range.

12. A machine (1) for a making a single portion of an ice cream product, in particular, gelato, configured to implement the method according to any one of the preceding claims, **characterized in that** it comprises:
- a storage tank (21) for a base mixture;
- a batch freezing chamber (2), in fluid communication with the storage tank (21) which stores the base mixture and which is provided with a base mixture infeed valve (9);
- a thermal system (10) for cooling the batch freezing chamber (2) operable to cool and/or batch freeze the base mixture present in the batch freezing chamber (2);
- a stirrer (4) mounted inside the batch freezing chamber (2);
- a control unit (11) connected to the cooling system (10) and to the stirrer (4) to drive them;
- a user interface (12), connected in use to the control unit (11), configured to send commands to the control unit (11), wherein the control unit (11) is configured to activate the thermal cooling system (10) and the stirrer (4) to keep the base mixture in a standby condition at a temperature in a range of between -5°C and 5°C.

13. The machine (1) according to claim 12, comprising at least one flavouring releasing device (5), in fluid communication with the batch freezing chamber (2) and configured to feed a predetermined quantity of flavouring into the batch freezing chamber (2).

14. The machine (1) according to claim 12 or 13, comprising a temperature sensor (13), connected to the batch freezing chamber (2) and to the control unit (11).

15. The machine (1) according to any one of claims 12 to 14, wherein the control unit (11) is configured to adjust at least one parameter relating to the thermal cooling system (10) and/or to the stirrer (4) as a function of the selection made.
